# EUROPEAN PATENT SPECIFICATION

(11) **EP 1 726 768 B1**
(45) Date of publication and mention of the grant of the patent: **04.05.2011**
(21) Application number: 06010509.5
(22) Date of filing: 22.05.2006
(51) Int. Cl.: E06B 3/96, B29C 65/20

(54) **Plastic casing, window or door and method for manufacturing thereof**
Kunststoffrahmen, -Fenster oder -Tür und dessen Herstellungsverfahren
Dormant, fenêtre ou porte en plastique et sa méthode de fabrication

(30) Priority: 23.05.2005 NL 1029090; 12.12.2005 NL 1030647
(43) Date of publication of application: 29.11.2006
(60) Divisional application: 09159976.1
(73) Proprietor: Nijhuis Toelevering B.V., 7461 JE Rijssen (NL)
(72) Inventor: Drenth, Hendrikus, 7671 JT Vriezenveen (NL); Olthof, Willem Hero, 7451 KK Holten (NL)
(74) Representative: Mink-Lindenburg, Charlotte Hildegard

(56) References cited:
- WO-A-96/12863

## Description

The present invention relates to a plastic casing, window or door, and to a method for manufacturing thereof.

In many plastic casings, windows or doors known in practice the joint seam between two adjoining profiles, this joint seam being visible on the outer side of the casing, window or door, runs obliquely relative to the longitudinal sides of these profiles. This oblique joint seam has slowly but surely become characteristic of plastic casings, windows or doors. It can be seen at a glance from this seam that the casing, window or door has been manufactured from plastic material.

Despite the many advantages which plastic casings, windows or doors offer from a technical viewpoint compared to wooden casings, windows or doors, in practice the sale of plastic casings, windows or doors lags behind that of wooden casings, windows or doors. Applicant is of the opinion that the difference in appearance between plastic casings, windows or doors and wooden casings, windows or doors is significant here.

The invention therefore has for its object to provide a plastic casing, window or door which better approximates the appearance of a wooden casing, window or door.

The international patent application WO 96/12863 describes a method for manufacturing a plastic casing, window or door which meets this objective.

The known method comprises the following steps of:
- selecting a number of profiles, which profiles are provided with a wall comprising plastic material, which wall encloses an at least partially hollow space;
- forming a first mitered surface in a first profile, which mitered surface runs substantially to a position some distance from an outer side of the first profile such that a residual portion of the first profile remains on the outer side;
- forming a second mitered surface in a second profile;
- forming a recess in an outer side of the second profile close to the second mitered surface for fitting accommodation of the residual portion of the first profile; and
- connecting the first and the second profile at the position of the mitered surfaces by means of welding.

These technical measures result in the plastic casing, window or door manufactured according to the known method having a straight joint seam instead of an oblique one, and on the basis hereof being no longer immediately distinguishable from a wooden casing, window or door.

The known method has the drawback however that the hollow spaces inside the profiles, which come to be partially exposed by these operations, remain partly visible in the thus manufactured casing, window or door. Caps developed especially for this application are arranged on the profiles in order to cover these spaces. However, these caps in turn partially undo the intended similarity to a wooden casing, window or door.

The invention has for its object to provide a method which obviates this drawback.

The method according to the invention as defined by claim 1 is characterized for this purpose by the steps of:
- forming the residual portion such that the thickness of the residual portion is smaller than or equal to the wall thickness of the associated profile.

The necessity of arranging caps is successfully avoided due to the inventive insight of giving the residual portion in the respective profile such a thin form that the hollow inner side of the respective profile remains concealed from view after the operations.

According to a first preferred embodiment step b) further comprises of arranging a notch of a predetermined width and depth in the first mitered surface in the first profile, which notch adjoins the residual portion, and step c) further comprises of arranging a notch of a predetermined width and depth in the second mitered surface in the second profile, which notch adjoins the recess, this such that adjacently of each of the notches a melting zone is created for the purpose of welding. Owing to the notch the welding element can always maintain a certain distance (corresponding to the width of the notch) from the thin residual portion. Undesirable deformation of the residual portion is hereby avoided. These measures also ensure a close fit between the two profiles for connecting following welding.

In a further practical preferred embodiment the first and the second profile are further connected along at least a part of the respective surfaces of the residual portion of the first profile and the recess of the second profile. The further connection increases the strength of the casing, window or door.

The further connection is preferably carried out by means of glueing the residual portion of the first profile into the recess of the second profile, for instance by means of a two-component glue. The glued residual portion offers a number of important advantages. It increases the strength of the connection between the profiles. This is an important aspect, particularly in the case of windows and doors. In addition, a glue connection has a water-repelling effect. Glueing of the residual portion is a great advantage in the case of coloured profiles, where under the influence of heat more temperature effect occurs than in traditional white profiles. Glueing is furthermore relatively inexpensive.

In a first variant the first mitered surface is formed on an outer end of the first profile, and the second mitered surface is formed on an outer end of the second profile. This variant is highly suitable for manufacturing a corner joint between the profiles.

In a second variant two first mitered surfaces running in a wedge shape are formed in the first profile, which wedge shape runs substantially to a position some distance from an outer side of the first profile such that a residual portion of the first profile remains on the outer side, and two second mitered surfaces running in a wedge shape are formed on an outer end of the second profile, and a recess is formed in an outer side of the second profile close to the wedge shape for fitting accommodation of the residual portion of the first profile. This variant is highly suitable for arranging a mullion.

The invention also relates to a casing, window or door manufactured by means of the method according to the invention as defined by claim 8, which can be identified by: a first and a second profile, which profiles are provided with a wall comprising plastic material, which wall encloses an at least partially hollow space, a first mitered surface in the first profile, which mitered surface runs substantially to a position some distance from an outer side of the first profile such that a residual portion of the first profile remains on the outer side, a second mitered surface in the second profile, a recess in an outer side of the second profile close to the second mitered surface for fitting accommodation of the residual portion of the first profile, which first and second profile are connected by means of welding at the position of the mitered surfaces, this such that between the first and the second profile on the outer side of the casing, window or door a joint seam runs substantially in the line of one of the longitudinal sides of the first profile or the second profile. According to the invention the thickness of the residual portion is smaller than or equal to the wall thickness of the associated profile.

In a first preferred embodiment the first and the second profile are further connected over at least a part of the surfaces of the residual portion of the first profile and the recess of the second profile. The residual portion is preferably glued into the recess.

The invention will now be discussed in more detail with reference to the drawing, in which
Figure 1A shows a schematic partial view of a first preferred embodiment of a plastic casing according to the invention with exploded parts;
Figure 1B shows the schematic partial view of the plastic casing of figure 1A with connected parts;
Figure 1C shows the casing in the view of figure 1A with partly cut-away profiles;
Figure 1D shows a schematic bottom view of the casing of figure 1B;
Figure 2A shows a schematic partial view of a second preferred embodiment of a plastic casing according to the invention with exploded parts;
Figure 2B shows the schematic partial view of the plastic casing of figure 2A with connected parts;
Figure 2C shows the casing in the view of figure 2A with partly cut-away profiles; and
Figure 3 shows a cross-sectional view through figure 1C for the purpose of illustrating the welding process.

Corresponding components are designated in the figures with the same reference numerals.

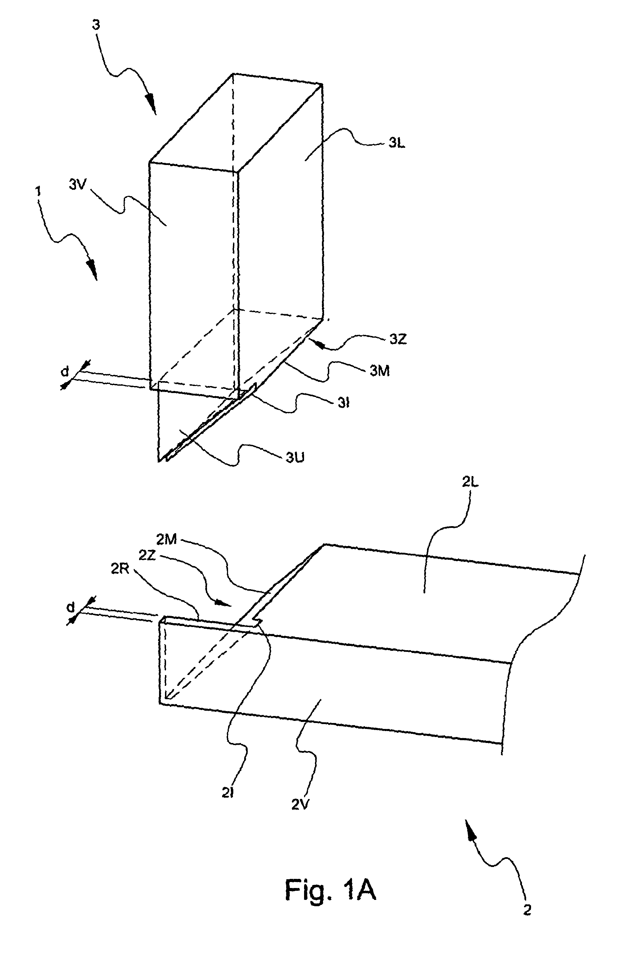

Figure 1A shows a corner of a plastic casing according to the invention. Casing 1 comprises a first profile 2 which is provided on an outer end with a mitered surface 2Z. Mitered surface 2Z runs from the inner side to a position some distance from the outer side 2V such that a residual portion 2R is formed on the outer side. Mitered surface 2Z runs obliquely relative to the longitudinal side 2L of profile 2. A notch 2I is arranged in mitered surface 2Z such that a protruding part 2M is formed over the remaining part of mitered surface 2Z.

Casing 1 also comprises a second profile 3 which is provided on an outer end with a mitered surface 3Z. Mitered surface 3Z runs from the inner side to the outer side 3V and obliquely relative to longitudinal side 3L of profile 3. A notch 3I is arranged in mitered surface 3Z such that a protruding part 3M is formed over the remaining part of mitered surface 3Z. A recess 3U is formed in outer side 3V.

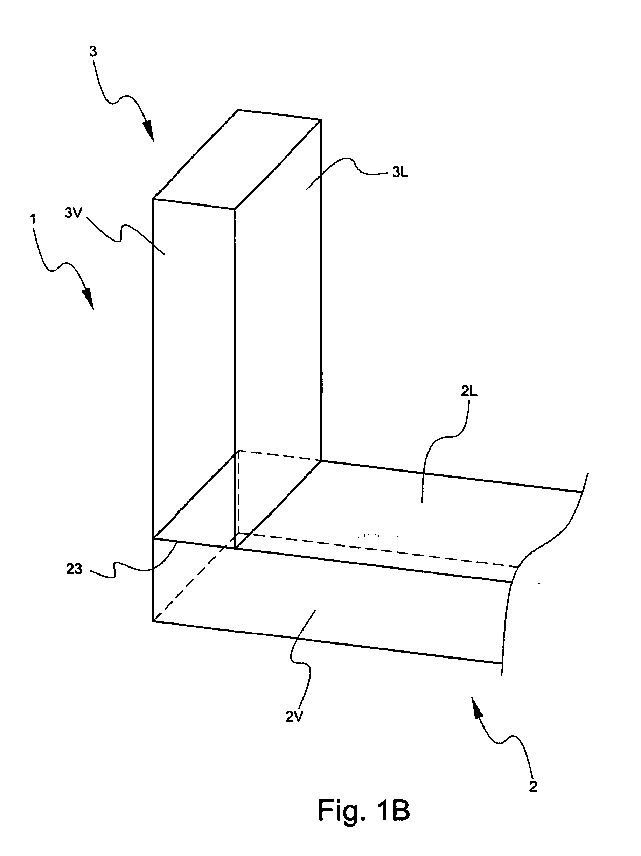

Figure 1B shows the corner of plastic casing 1 with connected parts. Clearly shown is that the resulting joint seam 23 between profile 2 and profile 3 runs straight, i.e. substantially parallel to the longitudinal side 2L of profile 2.

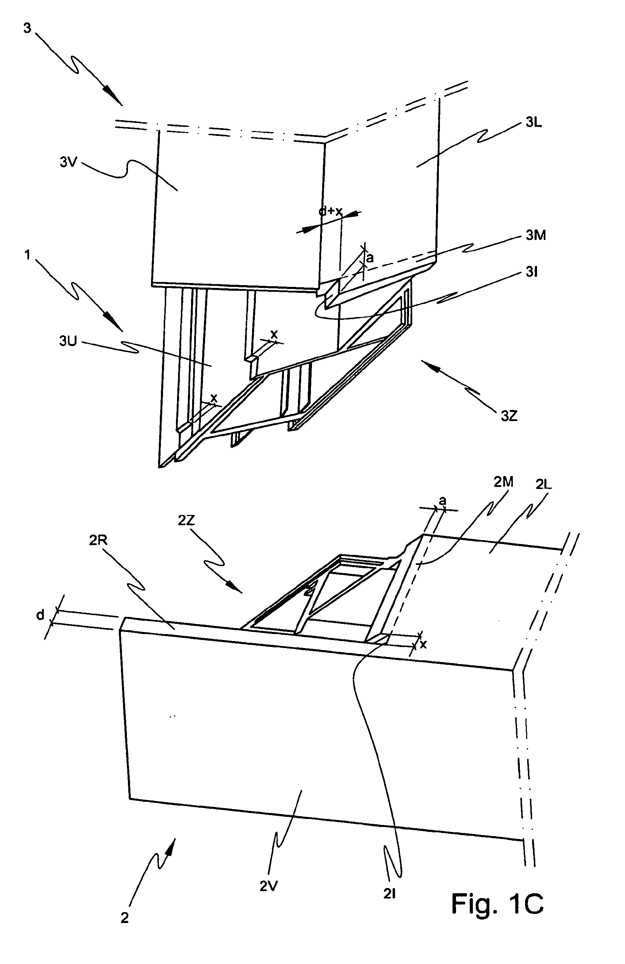

Figure 1C shows the corner of casing 1 with exploded parts with partially cut-away profiles 2 and 3. Shown here is that profiles 2 and 3 comprise a wall with plastic material, which wall encloses an at least partially hollow space. Residual portion 2R, which can also be referred to as a flange, has a predetermined thickness d which is chosen such that it is smaller than or equal to the thickness of the wall of profile 2 at that position. Recess 3U likewise has a predetermined thickness d which is chosen such that it is smaller than or equal to the thickness of the wall of profile 3 at that position.

Notches 2I and 3I both have a width x and a depth a. Now formed adjacently of the notches is a protruding part 2M, 3M respectively with a thickness a which extends substantially over the rest of mitered surface 2Z, 3Z respectively. Each of these protruding parts serves as melting zone for the purpose of welding.

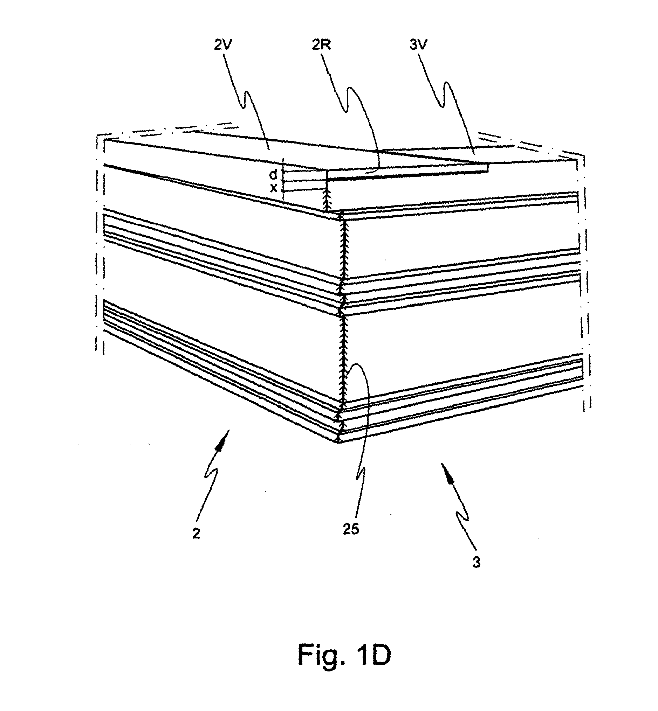

Figure 1D shows the casing of figure 1B in schematic bottom view with weld seam 25. Here can be seen that when profiles 2 and 3 are connected the hollow inner spaces are concealed from view in advantageous manner.

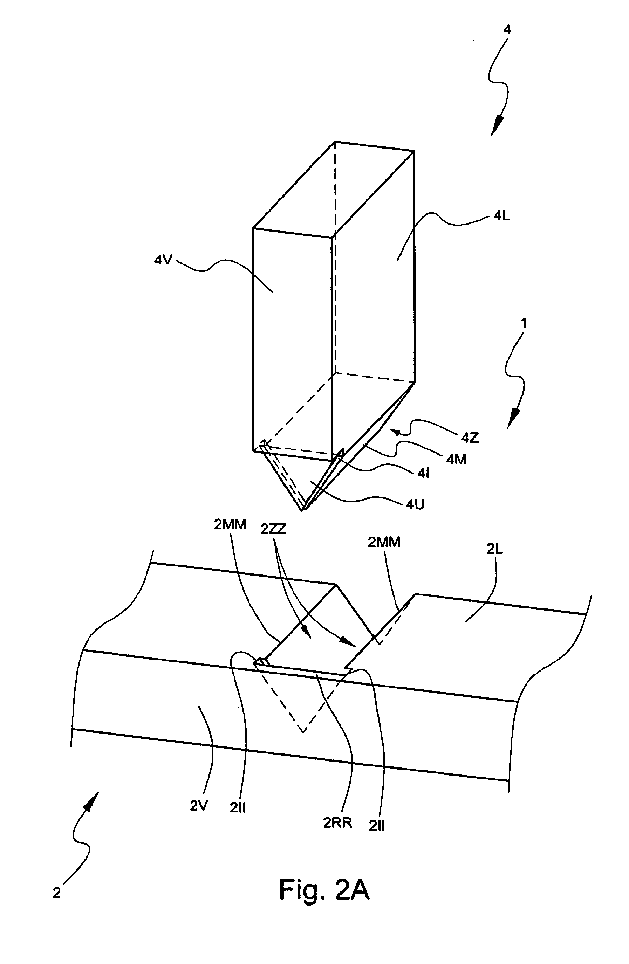

Figure 2A shows a mullion of plastic casing 1 according to the invention. Arranged in the first profile 2 are mitered surfaces 2ZZ which taper toward each other and which together form a V or a wedge. Mitered surfaces 2ZZ run from the inner side of profile 2 to a position some distance from outer side 2V such that a residual portion 2RR is formed on the outer side. Mitered surfaces 2ZZ run obliquely relative to longitudinal side 2L of profile 2. A notch 2II is arranged in both mitered surfaces 2ZZ such that protruding parts 2MM are formed over the remaining part of the two mitered surfaces 2ZZ.

Casing 1 also comprises a third profile 4 which is provided on an outer end with two mitered surfaces 4Z which taper toward each other and which together form a V or a wedge. Mitered surfaces 4Z run from the inner side to the outer side 4V and obliquely relative to longitudinal sides 4L of profile 4. A recess 4U is formed in outer side 4V. A notch 4I is arranged in both mitered surfaces 4Z such that protruding parts 4M are formed over the remaining part of mitered surfaces 4Z.

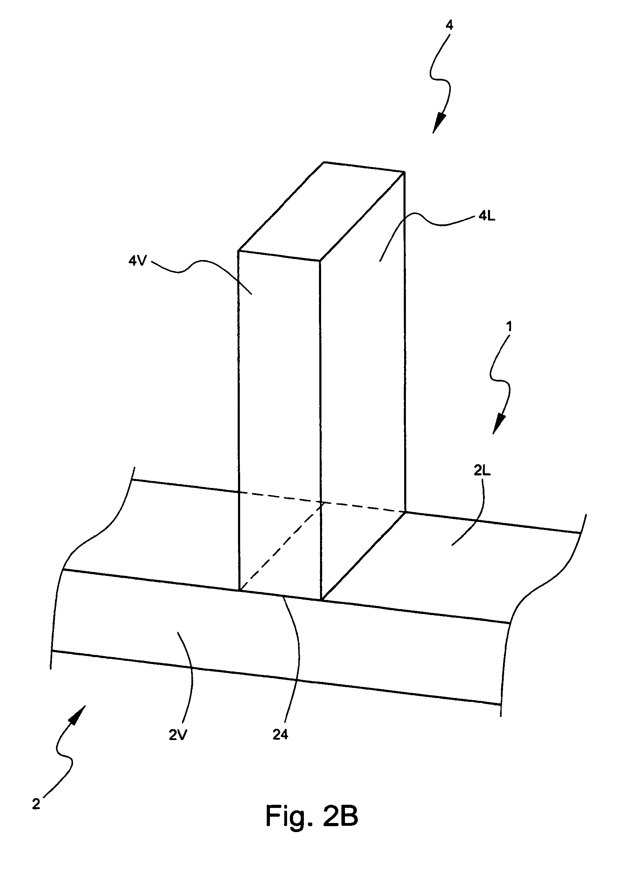

Figure 2B shows the mullion of plastic casing 1 with connected parts. It can clearly be seen that the resulting joint seam 24 between profile 2 and profile 4 runs straight, i.e. substantially parallel to the longitudinal side 2L of profile 2.

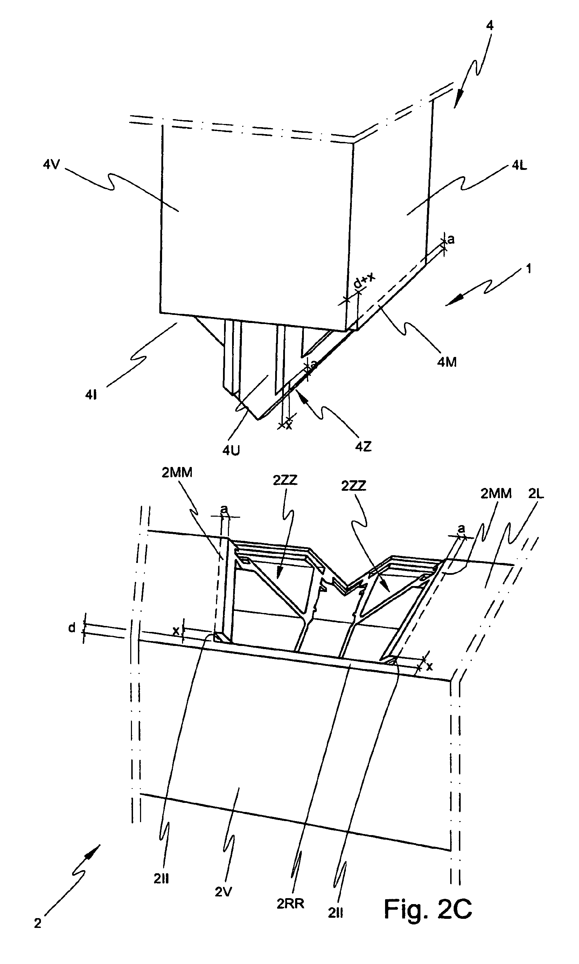

Figure 2C shows the mullion of casing 1 with exploded parts with partly cut-away profiles 2 and 4. Just as profile 2, profile 4 comprises a wall with plastic material, which wall encloses an at least partially hollow space. Residual portion 2RR has a predetermined thickness d which is chosen such that it is smaller than or equal to the thickness of the wall of profile 2 at that position. Recess 4U likewise has a predetermined thickness d which is chosen such that it is smaller than or equal to the thickness of the wall of profile 4 at that position.

Notches 2II and 4I have a width x and a depth a. Now formed adjacently of each notch is a protruding part 2MM, 4M respectively with a thickness a which extends substantially along the rest of mitered surface 2ZZ, 4Z respectively. Each of these protruding parts serves as melting zone for the purpose of welding.

Connecting of profiles 2 and 4 results in a casing with mullion as shown in figure 2B in which the hollow inner spaces of the profiles are concealed from view.

The shown plastic casing 1 is manufactured in accordance with the method according to the invention. The steps of the method are further elucidated below.

In a first step a number of profiles are selected. Profiles suitable for the invention are usually provided with a wall comprising plastic material, which wall encloses an at least partially hollow space (see figures 1C and 2C).

The type of plastic material is chosen subject to the application. PVC is generally chosen in the technical field. The invention is however also suitable for application with other types of plastic. The profiles can consist wholly of plastic, or only partially. Use can for instance be made of another basic material, such as wood, having a layer of plastic thereover.

In a second step a mitered surface 2Z is arranged on an outer end of a first profile 2. It is noted that arranging or forming of mitered surfaces in the context of the present invention can be performed by means of different techniques, including sawing or cutting or any other suitable technique known in the technical field.

Mitered surface 2Z runs according to the invention from the inner side to a position some distance from the outer side of the first profile where a residual portion 2R remains of the original outer side 2V of first profile 2. According to the invention the residual portion is formed such that the thickness d of the residual portion is smaller than or equal to the wall thickness of the associated profile at that position.

Arranged In a third step on an outer end of a second profile 3 is a mitered surface 3Z which corresponds with mitered surface 2Z in first profile 2. Mitered surfaces 2Z and 3Z are formed such that profiles 2 and 3 fit closely onto each other at the position of the mitered surfaces. Profiles 2 and 3 serve respectively as profile and mating profile.

In a fourth step a further surface is arranged according to the invention on the outer side 3V of second profile 3 close to mitered surface 3Z such that a recess 3U is created. Recess 3U is intended for fitting accommodation of residual portion 2R of first profile 2.

In a fifth step the first and the second profile 2 and 3 are connected at the position of mitered surfaces 2Z and 3Z. This takes place by means of techniques known in the field, such as welding or fusing of the plastic. The relevant requirements for such a welded joint are described in NEN 7056 "Window frames, windows and doors made of unplasticized PVC - Requirements and test method for welded joints and determination of the breaking stress".

Prior to the welding or fusing a further process has to be carried out on mitered surfaces 2Z and 3Z, and on residual portion 2R and recess 3U. In order to ensure that the profiles fit closely together in connected position, there must be sufficient fusible material present at the position of the welded joint. For this purpose a notch 2I is arranged in mitered surface 2Z such that a protruding part 2M is created which melts during the welding. In similar manner a notch 3I is arranged in mitered surface 3Z such that a protruding part 3M is created which likewise serves as melting material during welding.

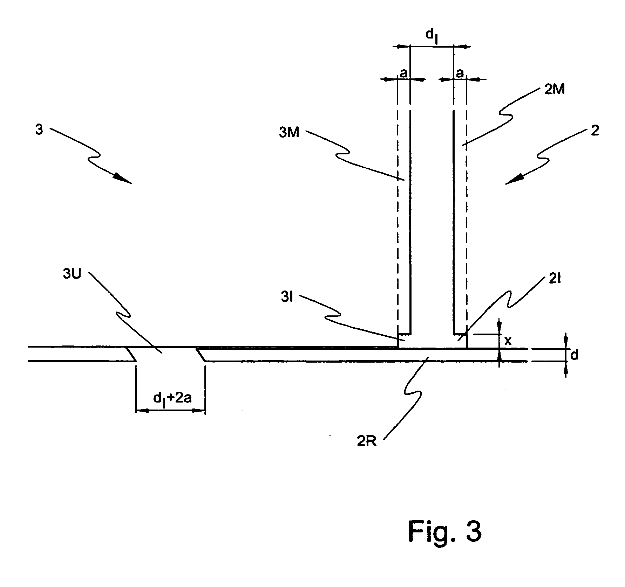

Figure 3 shows a cross-sectional view through figure 1C in which residual portion 2R of first profile 2 is received in recess 3U of second profile 3. For welding purposes a welding element is placed between profiles 2 and 3 against melting zones 2M, 3M. According to the invention a distance is maintained here between the welding element and residual portion 2R of a magnitude x, the width of notches 2I and 31. This prevents in effective manner undesirable deformations occurring in residual portion 2R.

In respect of the dimensions of d, a and x, it is the case that these must always be optimally modified to the situation. In practice the wall thickness of suitable profiles lies between 2 and 4 mm. The thickness d of the residual portion must be chosen smaller than or equal to this wall thickness. In this embodiment the dimension a for the melting zone amounts to substantially 3 mm. Suitable dimensions for the distance between a welding element and the residual portion (or the width of the notches), which is designated with x, lie in the order of magnitude of several millimetres, for instance between 3 and 6 mm. This distance x will generally have to increase as the thickness d of the residual portion decreases.

If desired, the connection between the first and the second profile 2 and 3 can be further strengthened by further connecting the first and the second profile 2, 3 along at least a part of the respective surfaces of residual portion 2R of the first profile and recess 3U of the second profile. The further connection is preferably realized by means of glueing the residual portion 2R into recess 3U. Holes can be made for this purpose at suitable locations in the residual portion and/or the recess, which serve for the injection of glue. Use is preferably made of a two-component glue. Suitable types of glue are for instance acrylic glue types, such as SikaFast ® adhesive. For glueing purposes the residual portion 2R and recess 3U can be clamped to each other. Other suitable connecting techniques can of course also be applied for the further connection between the residual portion and the recess, including screwing.

It is noted that the method is described on the basis of the connection between profiles 2 and 3 of figure 1A, wherein a corner of a casing 1 is formed as shown in figure 1B. The steps of the method can likewise be applied in the connecting of other profiles. An example hereof is the connection of a profile 4 to profile 2 to form a middle segment of casing 1 (see figures 2A, 2B). The method steps for this connection 2, 4 correspond with the above described method steps for connection 2, 3, on the understanding that two mitered surfaces 4Z tapering toward each other are arranged on profile 4, one of which is shown. For the connection to profile 4, profile 2 is provided with two corresponding mitered surfaces 2ZZ tapering toward each other which are not located in the vicinity of an outer end of profile 2. For the connection of profile 4 to profile 2 a number of the steps of the method according to the invention therefore have to be performed twice, i.e. once for each pair of mitered surfaces 2ZZ, 4Z to be connected. This involves the forming of two first mitered surfaces 2ZZ running in a wedge shape in the first profile 2, which wedge shape runs substantially to a position some distance from an outer side 2V of the first profile such that a residual portion 2RR of the first profile remains on the outer side. Two second mitered surfaces 4Z running in a wedge shape are also formed on an outer end of second profile 4. The required recess 4U is formed in an outer side 4V of second profile 4 close to the wedge shape for fitting accommodation of residual portion 2RR of first profile 2.

A skilled person in the field will now also be able to apply the steps of the method in the connecting of other profiles, for instance for the manufacture of a window or a door.

The present invention relates generally to a plastic casing, window and/or door. For the above description of the invention and in the figures the terms "outer side" and "inner side" are introduced to make for easier reading. Although it is expected that the invention will indeed usually be applied on the side of a plastic casing, window and/or door visible from the outside, it is not limited thereto. The invention can after all be applied on both sides of such a plastic casing, window and/or door.

It is further noted that, while the invention is described on the basis of a plastic casing manufactured from like profiles, the invention also extends to plastic casings, windows or doors manufactured from differing profiles, for instance profiles with different angles between the sides designated "L" and "V". Additional operations, which a skilled person in the field will be able to perform without difficulty, are then required in addition to the steps of the method according to the invention.

Finally, the invention is of course not limited to the shown and described preferred embodiments, but extends generally to any embodiment falling within the scope of the appended claims as seen in the light of the foregoing description and drawings.

## Claims

1. Method for manufacturing a casing, window or door, comprising the following steps of:
a) selecting a number of profiles (2, 3, 4), which profiles are provided with a wall comprising plastic material, which wall encloses an at least partially hollow space;
b) forming a first mitered surface (2Z; 2ZZ) in a first profile (2), which mitered surface runs substantially to a position some distance from an outer side (2V) of the first profile such that a residual portion (2R; 2RR) of the first profile remains on the outer side;
c) forming a second mitered surface (3Z; 4Z) in a second profile (3; 4);
d) forming a recess (3U; 4U) in an outer side (3V; 4V) of the second profile (3; 4) close to the second mitered surface for fitting accommodation of the residual portion (2R; 2RR) of the first profile; and
e) connecting the first and the second profile at the position of the mitered surfaces by means of welding, such that between the first and the second profile on the outer side of the casing, window or door a joint seam (23;24) runs substantially in the line of one of the longitudinal sides (2L; 3L; 4L) of the first profile (2),
**characterized in that** the method further comprises the step of:
f) forming the residual portion (2R; 2RR) and the recess (3U; 4U) such that the thickness (d) of the residual portion is smaller than or equal to the wall thickness of the associated profile (2) at that position.

2. Method as claimed in claim 1, wherein step b) further comprises of arranging a notch (2I; 2II) of a predetermined width (x) and depth (a) in the first mitered surface (2Z; 2ZZ) in the first profile (2), which notch adjoins the residual portion (2R; 2RR), and wherein step c) further comprises of arranging a notch (3I; 4I) of a predetermined width (x) and depth (a) in the second mitered surface (3Z; 4Z) in the second profile (3; 4), which notch adjoins the recess (3U; 4U), this such that adjacently of each of the notches (2I; 2II; 3I; 4I) a melting zone is created for the purpose of welding.

3. Method as claimed in claim 1 or 2, which method further comprises the step of connecting the first and the second profile (2, 3; 2, 4) along at least a part of the respective surfaces of the residual portion (2R; 2RR) of the first profile and the recess (3U; 4U) of the second profile.

4. Method as claimed in claim 3, wherein the connecting is carried out by glueing the residual portion (2R; 2RR) of the first profile (2) into the recess (3U; 4U) of the second profile (3; 4).

5. Method as claimed in claim 4, wherein a two-component glue is used for the glueing.

6. Method as claimed in any of the foregoing claims, wherein in step b) the first mitered surface (2Z) is formed on an outer end of the first profile (2), and wherein in step c) the second mitered surface (3Z) is formed on an outer end of the second profile (3).

7. Method as claimed in any of the foregoing claims 1-5, wherein step b) is in each case performed twice to form two first mitered surfaces (2ZZ) running in a wedge shape in the first profile (2), which wedge shape runs substantially to a position some distance from an outer side (2V) of the first profile such that a residual portion (2RR) of the first profile remains on the outer side, wherein step c) is in each case performed twice to form two second mitered surfaces (4Z) running in a wedge shape on an outer end of the second profile (4), and wherein step d) comprises of forming a recess (4U) in an outer side (4V) of the second profile (4) close to the wedge shape for fitting accommodation of the residual portion (2RR) of the first profile (2).

8. Casing, window or door, comprising:
a) a first (2) and a second profile (3; 4), which profiles are provided with a wall comprising plastic material, which wall encloses an at least partially hollow space;
b) a first mitered surface (2Z; 2ZZ) in the first profile (2), which mitered surface runs substantially to a position some distance from an outer side (2V) of the first profile such that a residual portion (2R; 2RR) of the first profile remains on the outer side;
c) a second mitered surface (3Z; 3ZZ) in the second profile (3; 4);
d) a recess (3U; 4U) in an outer side (3V; 4V) of the second profile (3, 4) close to the second mitered surface for fitting accommodation of the residual portion (2R; 2RR) of the first profile, which first and second profile are connected by means of welding at the position of the mitered surfaces, this such that between the first and the second profile on the outer side of the casing, window or door a joint seam (23; 24) runs substantially in the line of one of the longitudinal sides (2L; 3L; 4L) of the first profile (2), **characterized in that**:
e) the thickness (d) of the residual portion (2R; 2RR) is smaller than or equal to the wall thickness of the associated profile at that position.

9. Casing, window or door as claimed in claim 8, wherein the first and the second profile (2, 3; 2, 4) are further connected over at least a part of the surfaces of the residual portion (2R; 2RR) of the first profile and the recess (3U; 4U) of the second profile.

10. Casing, window or door as claimed in claim 9, wherein the residual portion (2R; 2RR) is glued into the recess (3U; 4U).

## Patentansprüche

1. Verfahren zur Herstellung von Rahmen, Fenstern oder Türen, umfassend die folgenden Schritte:
a) Auswahl einer Reihe von Profilen (2, 3, 4), wobei die Profile mit einer Wand, bestehend aus Kunststoff, versehen sind, wobei die Wand zumindest teilweise einen Hohlraum umschließt;
b) Ausbilden einer ersten Gehrungsfläche (2Z; 2ZZ) an einem ersten Profil (2), dessen Gehrungsfläche im Wesentlichen zu einer Position mit einigem Abstand von einer Außenseite (2V) von dem ersten Profil derart verläuft, dass ein restlicher Abschnitt (2R; 2RR) von dem ersten Profil auf der Außenseite verbleibt;
c) Ausbilden einer zweiten Gehrungsfläche (3Z; 4Z) an einem zweiten Profil (3; 4);
d) Ausbilden einer Aussparung (3U; 4U) an einer Außenseite (3V; 4V) des zweiten Profils (3; 4), nahe der zweiten Gehrungsfläche, zur formschlüssigen Aufnahme des restlichen Abschnitts (2R; 2RR) des ersten Profils und
e) Verbinden des ersten und des zweiten Profils an der Position der Gehrungsflächen durch derartiges Schweißen, dass zwischen dem ersten und dem zweiten Profil auf der Außenseite des Gehäuses, Fensters oder Tür eine Verbindungsnaht (23; 24) im Wesentlichen entlang einer der Längsseiten (2L; 3L; 4L) des ersten Profils (2) verläuft
**dadurch gekennzeichnet, dass** das Verfahren des Weiteren folgenden Schritt umfasst:
f) Ausbilden des restlichen Abschnitts (2R; 2RR) und der Aussparung (3U; 4U) derart, dass die Dicke (d) des restlichen Abschnitts kleiner als oder gleich wie die Dicke der Wand des verbundenen Profils (2) an dieser Position ist.

2. Verfahren gemäß Anspruch 1, wobei Schritt b) des Weiteren das Vorsehen einer Aussparung (2I; 2II) mit einer vorgegebenen Breite (x) und Tiefe (a) in der ersten Gehrungsfläche (2Z; 2ZZ) des ersten Profils (2) umfasst, wobei die Aussparung an den restlichen Abschnitt (2R; 2RR) angrenzt, und wobei Schritt c) des Weiteren das Vorsehen einer Aussparung (3I; 4I) mit einer vorgegebenen Breite (x) und Tiefe (a) in der zweiten Gehrungsfläche (3Z; 4Z) des zweiten Profils (3; 4) umfasst, wobei die Aussparung an den restlichen Abschnitt (3U; 4U) derart angrenzt, dass angrenzend an jeder der Aussparungen (2I, 2II, 3I, 4I) zwecks Schweißen eine Schmelzzone geschaffen wird.

3. Verfahren gemäß Anspruch 1 oder 2, wobei das Verfahren des Weiteren einen Schritt zum Verbinden des ersten und des zweiten Profils (2, 3; 2, 4) entlang zumindest eines Teils der entsprechenden Oberfläche des restlichen Abschnitts (2R; 2RR) des ersten Profils und der Aussparung (3U; 4U) des zweiten Profils umfasst.

4. Verfahren gemäß Anspruch 3, wobei das Verbinden durch Kleben des restlichen Abschnitts (2R; 2RR) des ersten Profils (2) in die Aussparung (3U; 4U) des zweiten Profils (3; 4) durchgeführt wird.

5. Verfahren gemäß Anspruch 4, wobei ein Zwei-Komponenten-Kleber für das Kleben verwendet wird.

6. Verfahren gemäß einem der vorangegangenen Ansprüche, wobei in Schritt b) die erste Gehrungsfläche (2Z) an einem äußeren Ende des ersten Profils (2) ausgebildet ist und wobei in Schritt c) die zweite Gehrungsfläche (3Z) an einem äußeren Ende des zweiten Profils (3) ausgebildet ist.

7. Verfahren gemäß einem der vorangegangenen Ansprüche 1-5, wobei Schritt b) jeweils zweimal durchgeführt wird, um zwei erste Gehrungsflächen (2ZZ) zu formen, die keilförmig entlang des ersten Profils (2) verlaufen, dessen keilförmige Form im Wesentlichen zu einer Position mit einigem Abstand von einer Außenseite (2V) von dem ersten Profil derart verläuft, dass ein restlicher Abschnitt (2RR) von dem ersten Profil auf der Außenseite verbleibt, wobei Schritt c) jeweils zweimal durchgeführt wird, um zwei zweite Gehrungsflächen (4Z) zu formen, die keilförmig entlang des zweiten Profils (4) verlaufen, und wobei Schritt d) das Ausbilden einer Aussparung (4U) an einer Außenseite (4V) des zweiten Profils (4), nahe der Keilform, zur formschlüssigen Aufnahme des restlichen Abschnitts (2RR) des ersten Profils (2) umfasst.

8. Rahmen, Fenster oder Tür, umfassend:
a) ein erstes (2) und ein zweites Profil (3; 4), wobei die Profile mit einer Wand, bestehend aus Kunststoff, versehen sind, wobei die Wand zumindest teilweise einen Hohlraum umschließt;
b) eine erste Gehrungsfläche (2Z; 2ZZ) an einem ersten Profil (2), dessen Gehrungsfläche im Wesentlichen zu einer Position mit einigem Abstand von einer Außenseite (2V) von dem ersten Profil derart verläuft, dass ein restlicher Abschnitt (2R; 2RR) von dem ersten Profil auf der Außenseite verbleibt;
c) eine zweite Gehrungsfläche (3Z; 4Z) an einem zweiten Profil (3; 4);
d) eine Aussparung (3U; 4U) an einer Außenseite (3V; 4V) des zweiten Profils (3; 4), nahe der zweiten Gehrungsfläche, zur formschlüssigen Aufnahme des restlichen Abschnitts (2R; 2RR) des ersten Profils, wobei das erste und das zweite Profil mittels Schweißen an der Position der Gehrungsflächen derart verbunden sind, dass zwischen dem ersten und dem zweiten Profil auf der Außenseite des Rahmens, des Fensters oder der Tür eine Verbindungsnaht (23; 24) im Wesentlichen entlang einer der Längsseiten (2L; 3L; 4L) des ersten Profils (2) verläuft, **dadurch gekennzeichnet, dass**:
e) die Dicke (d) des restlichen Abschnitts (2R; 2RR) kleiner als oder gleich wie die Dicke der Wand des zugeordneten Profils an dieser Position ist.

9. Rahmen, Fenster oder Tür gemäß Anspruch 8, wobei das erste und das zweite Profil (2, 3; 2, 4) zumindest teilweise durch die Oberfläche des restlichen Abschnitts (2R; 2RR) des ersten Profils und die Aussparung (3U; 4U) des zweiten Profils verbunden sind.

10. Rahmen, Fenster oder Tür gemäß Anspruch 9, wobei der restliche Abschnitt (2R; 2RR) in der Aussparung (3U; 4U) verklebt ist.

## Revendications

1. Procédé de fabrication d'un encadrement, d'une fenêtre ou d'une porte, comprenant les étapes suivantes consistant à :
a) sélectionner un certain nombre de profilés (2, 3, 4), lesquels profilés sont munis d'une paroi comprenant une matière plastique, laquelle paroi entoure un espace au moins partiellement creux ;
b) former une première surface à onglet (2Z ; 2ZZ) dans un premier profilé (2), laquelle surface à onglet s'étend sensiblement jusqu'à une position située à une certaine distance d'un côté extérieur (2V) du premier profilé de telle sorte qu'une partie résiduelle (2R ; 2RR) du premier profilé reste sur le côté extérieur :
c) former une seconde surface à onglet (3Z ; 4Z) dans un second profilé (3 ; 4) ;
d) former un évidement (3U ; 4U) sur un côté extérieur (3V ; 4V) du second profilé (3 ; 4) près de la seconde surface à onglet afin de recevoir la partie résiduelle (2R ; 2RR) du premier profilé ; et
e) raccorder le premier et le second profilé au niveau des surfaces à onglet par soudure, de telle sorte que, entre le premier et le second profilé sur le côté extérieur de l'encadrement, de la fenêtre ou de la porte une ligne de joint (23 ; 24) se trouve sensiblement alignée avec l'un des côtés longitudinaux (2L ; 3L ; 4L) du premier profilé (2),
**caractérisé en ce que** le procédé comprend en outre l'étape consistant à :
f) former la partie résiduelle (2R ; 2RR) et l'évidement (3U ; 4U) de telle sorte que l'épaisseur (d) de la partie résiduelle est inférieure ou égale à l'épaisseur de paroi du profilé associé (2), à cet emplacement.

2. Procédé selon la revendication 1, dans lequel l'étape b) comprend en outre l'agencement d'une encoche (2I ; 2II) d'une largeur (x) et d'une profondeur (a) prédéterminées sur la première surface à onglet (2Z ; 2ZZ) dans le premier profilé (2), laquelle encoche est contiguë à la partie résiduelle (2R ; 2RR), et dans lequel l'étape c) comprend en outre l'agencement d'une encoche (31 ; 41) d'une largeur (x) et d'une profondeur (a) prédéterminées sur la seconde surface à onglet (3Z ; 4Z) dans le second profilé (3 ; 4), laquelle encoche est contiguë à l'évidement (3U ; 4U), de telle sorte qu'une zone de fusion est créée aux fins de soudure de manière adjacente à chacune des encoches (2I ; 2II; 3I ; 4I).

3. Procédé selon la revendication 1 ou 2, lequel procédé comprend en outre l'étape de raccordement du premier et du second profilé (2, 3 ; 2, 4) le long d'au moins une partie des surfaces respectives de la partie résiduelle (2R ; 2RR) du premier profilé et de l'évidement (3U ; 4U) du second profilé.

4. Procédé selon la revendication 3, dans lequel le raccordement est réalisé par le collage de la partie résiduelle (2R ; 2RR) du premier profilé (2) dans l'évidement (3U ; 4U) du second profilé (3 ; 4).

5. Procédé selon la revendication 4, dans lequel une colle à deux composants est utilisée pour le collage.

6. Procédé selon l'une quelconque des revendications précédentes, dans lequel au cours de l'étape b), la première surface à onglet (2Z) est formée sur une extrémité extérieure du premier profilé (2), et dans lequel au cours de l'étape c) la seconde surface à onglet (3Z) est formée sur une extrémité extérieure du second profilé (3).

7. Procédé selon l'une quelconque des revendications 1 à 5 précédentes, dans lequel l'étape b) est réalisée, dans chaque cas, deux fois, pour former deux premières surfaces à onglet (2ZZ) avec une forme de coin dans le premier profilé (2), laquelle forme de coin s'étend sensiblement jusqu'à une position située à une certaine distance d'un côté extérieur (2V) du premier profilé de telle sorte qu'une partie résiduelle (2RR) du premier profilé reste sur le côté extérieur, dans lequel l'étape c) est, dans chaque cas, réalisée deux fois pour former deux secondes surfaces à onglet (4Z) qui s'étendent avec une forme de coin sur une extrémité extérieure du second profilé (4), et dans lequel l'étape d) comprend la formation d'un évidement (4U) sur un côté extérieur (4V) du second profilé (4) près de la forme de coin pour recevoir la partie résiduelle (2RR) du premier profilé (2).

8. Encadrement, fenêtre ou porte, comprenant :
a) un premier (2) et un second profilé (3 ; 4), lesquels profilés sont munis d'une paroi comprenant une matière plastique, laquelle paroi entoure un espace au moins partiellement creux;
b) une première surface à onglet (2Z ; 2ZZ) dans le premier profilé (2), laquelle surface à onglet s'étend sensiblement jusqu'à une position située à une certaine distance d'un côté extérieur (2V) du premier profilé de telle sorte qu'une partie résiduelle (2R ; 2RR) du premier profilé reste sur le côté extérieur;
c) une seconde surface à onglet (3Z ; 4Z) dans le second profilé (3 ; 4);
d) un évidement (3U ; 4U) dans un côté extérieur (3V ; 4V) du second profilé (3 ; 4) près de la seconde surface à onglet afin de recevoir la partie résiduelle (2R ; 2RR) du premier profilé, lesquels premier et second profilés sont raccordés au moyen d'une soudure au niveau des surfaces à onglet, de telle sorte que, entre le premier et le second profilé sur le côté extérieur de l'encadrement, de la fenêtre ou de la porte une ligne de joint (23 ; 24) se trouve sensiblement alignée avec l'un des côtés longitudinaux (2L ; 3L ; 4L) du premier profilé (2),
**caractérisé en ce que** ;
e) l'épaisseur (d) de la partie résiduelle (2R ; 2RR) est inférieure ou égale à l'épaisseur de paroi du profilé associé à cet emplacement.

9. Encadrement, fenêtre ou porte selon la revendication 8, dans lequel/laquelle le premier et le second profilé (2, 3 ; 2, 4) sont en outre raccordés sur au moins une partie des surfaces de la partie résiduelle (2R ; 2RR) du premier profilé et de l'évidement (3U ; 4U) du second profilé.

10. Encadrement, fenêtre ou porte selon la revendication 9, dans lequel/laquelle la partie résiduelle (2R ; 2RR) est collée dans l'évidement (3U ; 4U).
